# EUROPEAN PATENT SPECIFICATION

(11) **EP 4 769 325 B1**
(45) Date of publication and mention of the grant of the patent: **30.09.2026**
(21) Application number: 24863826.4
(22) Date of filing: 28.10.2024
(51) Int. Cl.: G06T 7/73, G06T 7/00, G06T 19/20, G01B 11/24

(54) **IMAGE ANALYSIS APPARATUS, IMAGE ANALYSIS METHOD, AND COMPUTER PROGRAM**
BILDANALYSEVORRICHTUNG, BILDANALYSEVERFAHREN UND COMPUTERPROGRAMM
DISPOSITIF D'ANALYSE D'IMAGE, PROCÉDÉ D'ANALYSE D'IMAGE, ET PROGRAMME INFORMATIQUE

(43) Date of publication of application: 01.07.2026
(73) Proprietor: CalTa Inc., Minato-ku Tokyo 108-0074 (JP)
(72) Inventor: TAKAMIZAWA, Takuya, Tokyo 108-0074 (JP); IGUCHI, Shigenobu, Tokyo 108-0074 (JP); MATSUMOTO, Hiroki, Tokyo 108-0074 (JP)
(74) Representative: Hasegawa, Kan
(86) International application number: PCT/JP2024/038403
(87) International publication number: WO 2026/094118

(56) References cited:
- WO-A1-2021/044628
- JP-A- 2016 105 081
- JP-A- 2018 041 278
- JP-A- 2019 101 849
- JP-A- 2019 101 849
- US-A1- 2016 196 643

## Description

### [TECHNICAL FIELD]

The present disclosure relates to an image analysis apparatus, an image analysis method, and a computer program.

### [BACKGROUND ART]

In the point cloud data utilization system described in JP 2016 - 105 081 A, an operator uses an operation unit to designate a predetermined number of points (for example, 3 points) from among projected coordinate points in an image of an area where an inspection target object is displayed. Next, a control unit generates a plane including each coordinate point corresponding to the designated projected coordinate points as a virtual reference plane. The virtual reference plane virtually represents a surface in an ideal state with no damage, etc. Next, the control unit extracts each coordinate point whose normal distance from the virtual reference plane is greater than or equal to a predetermined value as a feature point. Next, a display unit changes colors of only the projected coordinate points corresponding to the feature points to distinguish them from other projected coordinate points. As a result, the regions that protrude or are depressed from the virtual reference plane by more than or equal to a predetermined amount are characterized and displayed.

WO 2021/044628 A1 describes a deformation detection system, which comprises an acquisition unit, data conversion unit, and level difference detection unit. The acquisition unit acquires three-dimensional point cloud data that is data representing the surface of a structure as a three-dimensional point cloud and shape data indicating the shape of the structure. The data conversion unit sets a reference surface corresponding to the surface of the structure on the basis of the shape data and converts the three-dimensional point cloud data into element point cloud data including data for a plurality of element points that each express the amount of deviation from the reference surface of the position of one point selected from a plurality of points arranged in a matrix on the reference surface. The level difference detection unit detects the position of a level difference on the surface of the structure on the basis of the result of subjecting the plurality of element points included in the element point cloud data to a difference-of-Gaussian filter.

### [SUMMARY OF INVENTION]

### [Technical Problem]

However, in the point cloud data utilization system described in JP 2016 - 105 081 A, when the amount of protrusion or depression of the inspection target object is relatively small, the normal distance from the virtual reference plane to a coordinate point may become less than the predetermined value, and the coordinate point may not be extracted as the feature point. In other words, there is a possibility that a detection omission of an abnormality in the inspection target object may occur.

Therefore, the present disclosure has been made in view of the foregoing and has its object of providing an image analysis apparatus, an image analysis method, and a computer program that make it possible to suppress an occurrence of a detection omission of an abnormality in a target object.

### [Solution to Problem]

The present invention relates to an image analysis apparatus according to claim 1, an image analysis method according to claim 8, and a computer program according to claim 9. Claims 2 to 7 refer to specifically advantageous realizations of the image analysis apparatus according to claim 1.

According to an aspect of the present disclosure, there is provided an image analysis apparatus comprising: a posture calculation unit that calculates a plurality of posture information items respectively indicating postures of a plurality of facets constituting a surface of a three-dimensional model , the three-dimensional model being placed in a virtual space and representing a target object in a real space; a reference calculation unit that calculates reference plane information indicating a reference plane based on three or more surface location information items, the surface location information items respectively indicating locations of three or more specific spots on the three-dimensional model; and a relative posture calculation unit that calculates relative posture information items indicating postures of the facets relative to the reference plane based on the posture information items and the reference plane information.

Also, according to an aspect of the present disclosure, there is provided an image analysis method comprising: calculating a plurality of posture information items respectively indicating postures of a plurality of facets constituting a surface of a three-dimensional model, the three-dimensional model being placed in a virtual space and representing a target object in a real space; calculating reference plane information indicating a reference plane based on three or more surface location information items, the surface location information items respectively indicating locations of three or more specific spots on the three-dimensional model; and calculating relative posture information items indicating postures of the facets relative to the reference plane based on the posture information items and the reference plane information.

Furthermore, according to an aspect of the present disclosure, there is provided a computer program causing a computer to perform: calculating a plurality of posture information items respectively indicating postures of a plurality of facets constituting a surface of a three-dimensional model, the three-dimensional model being placed in a virtual space and representing a target object in a real space; calculating reference plane information indicating a reference plane based on three or more surface location information items, the surface location information items respectively indicating locations of three or more specific spots on the three-dimensional model; and calculating relative posture information items indicating postures of the facets relative to the reference plane based on the posture information items and the reference plane information.

### [Advantageous Effects of Invention]

According to the present disclosure, it is possible to provide an image analysis apparatus, an image analysis method, and a computer program that make it possible to suppress an occurrence of a detection omission of an abnormality in a target object.

### [BRIEF DESCRIPTION OF DRAWINGS]

[FIG. 1]

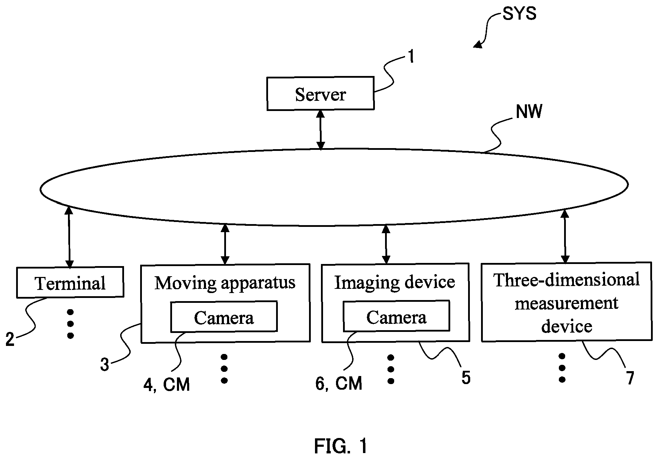

   FIG. 1 is a block diagram showing an example configuration of an image analysis system according to an embodiment of the present invention.
[FIG. 2]

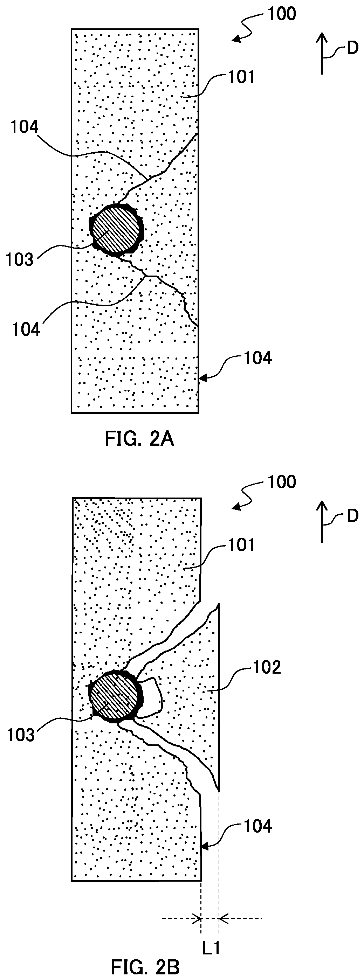

   FIGS. 2A and 2B are schematic cross-sectional views showing a phenomenon of floating occurring in concrete of a reinforced concrete structure, which is a target object.
[FIG. 3]

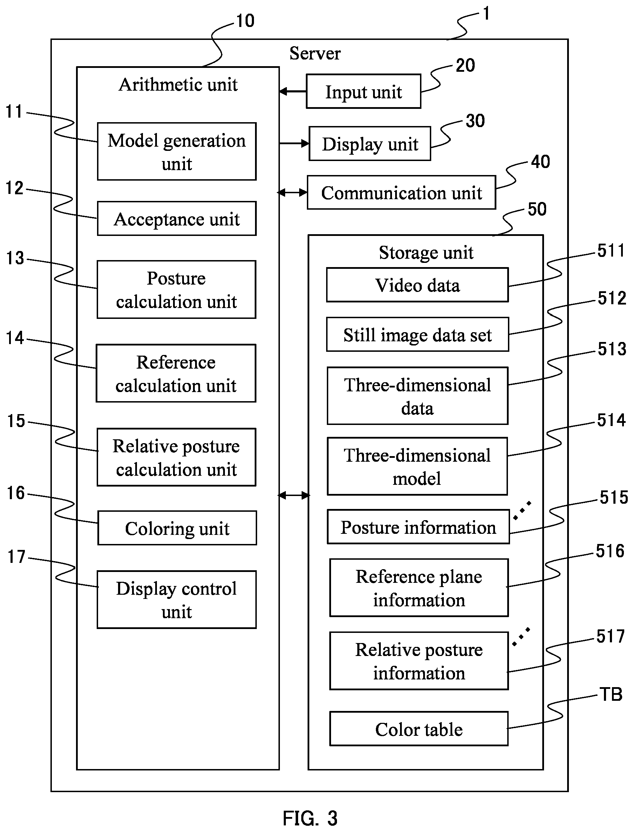

   FIG. 3 is a block diagram showing an example configuration of a server according to the embodiment.
[FIG. 4]

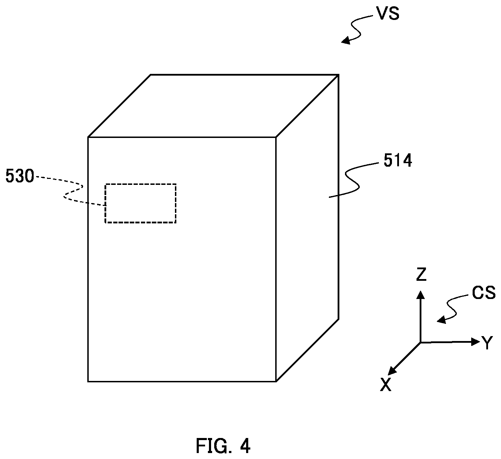

   FIG. 4 is a perspective view showing an example of a three-dimensional model according to the embodiment.
[FIG. 5]

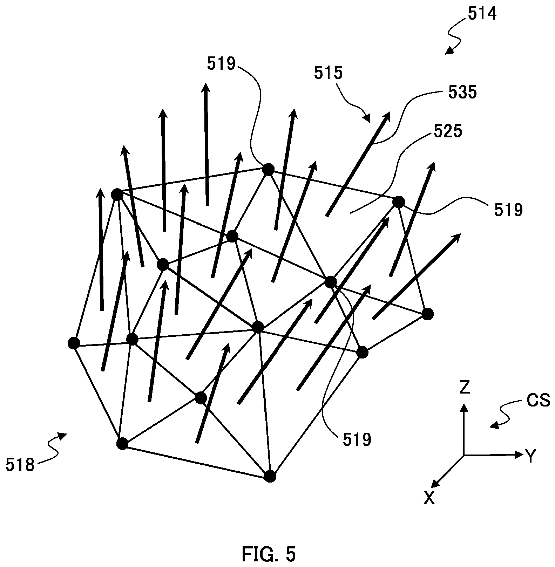

   FIG. 5 is a perspective view showing an example of facets constituting a surface of a three-dimensional model according to the embodiment.
[FIG. 6]

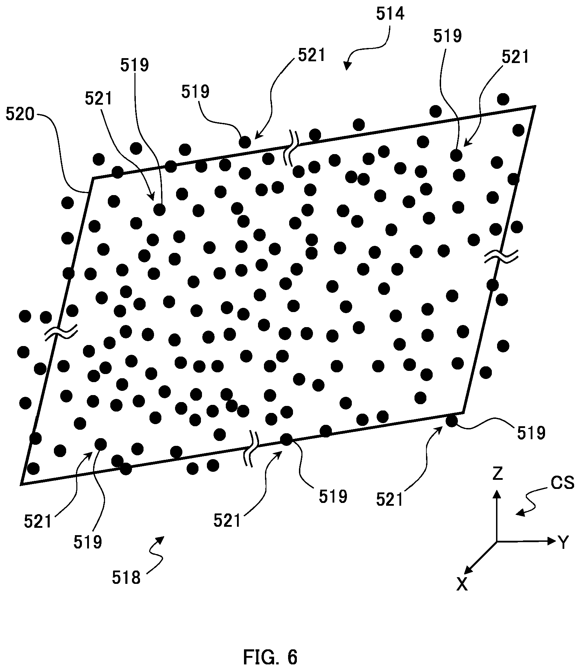

   FIG. 6 is a perspective view showing an example of a point cloud and a reference plane according to the embodiment.
[FIG. 7]

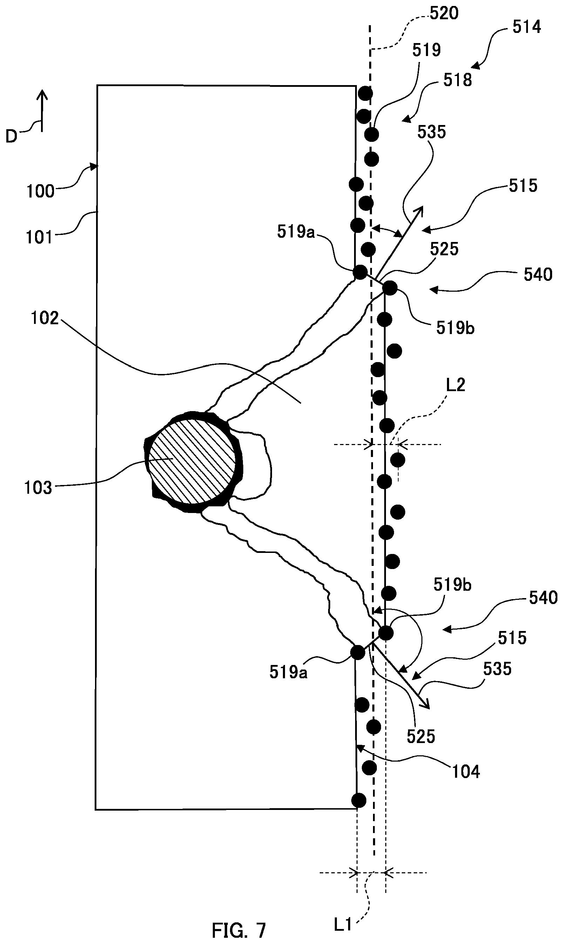

   FIG. 7 is a figure showing a cross-section of a target object superimposed on a point cloud of a three-dimensional model and a reference plane according to the embodiment.
[FIG. 8]

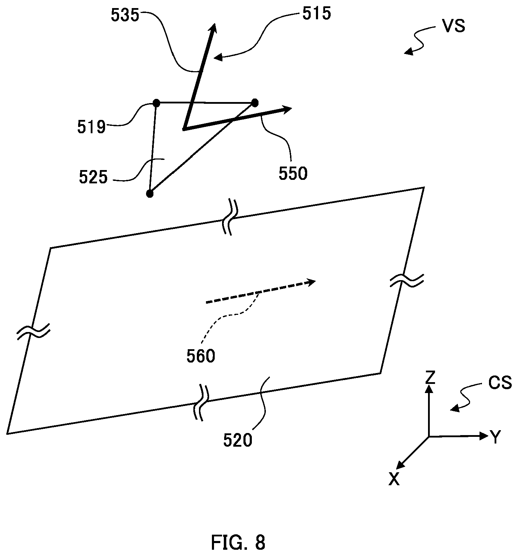

   FIG. 8 is a perspective view showing a reference plane, a reference plane vector, a facet, a normal vector, and a reference vector according to the embodiment.
[FIG. 9]

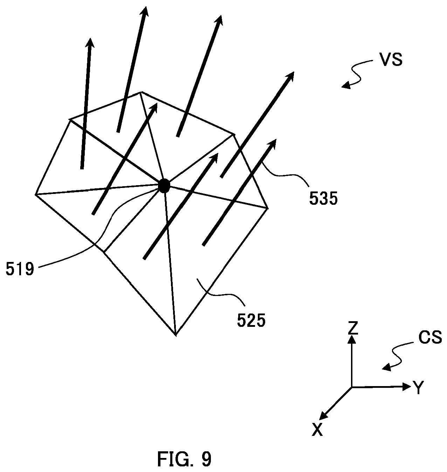

   FIG. 9 is a perspective view showing an example of multiple facets sharing one point in a point cloud according to the embodiment.
[FIG. 10]

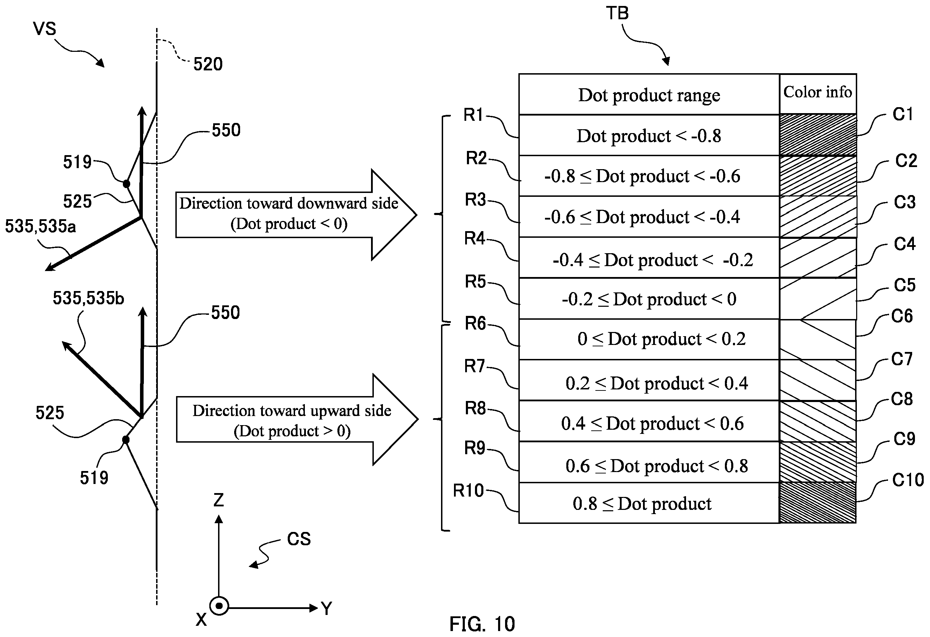

   FIG. 10 is a figure showing a color table according to the embodiment.
[FIG. 11]

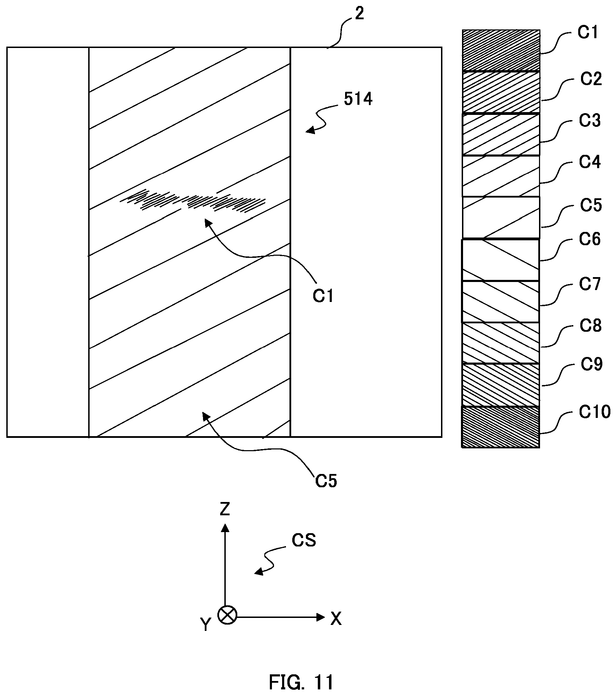

   FIG. 11 is a figure schematically showing a colored three-dimensional model according to the embodiment.
[FIG. 12]

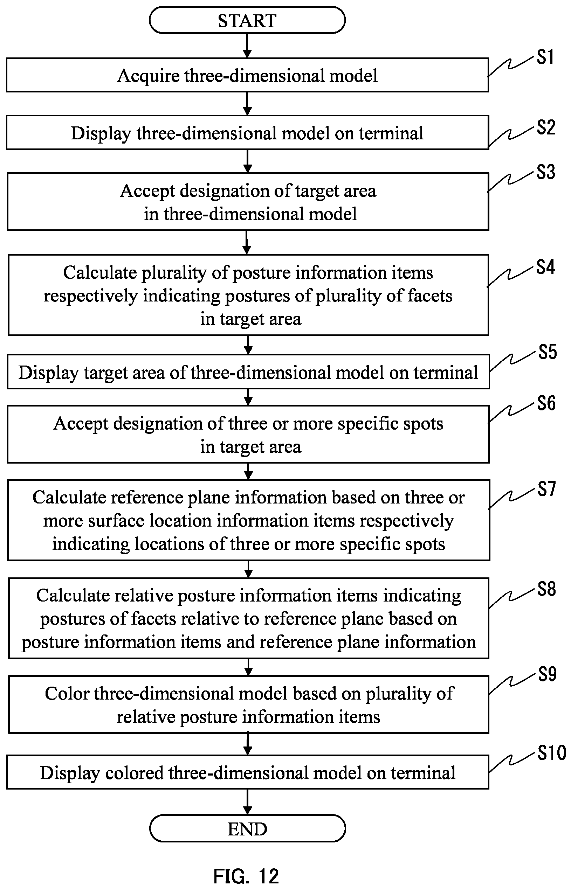

   FIG. 12 is a flowchart showing am image analysis method according to the embodiment.

### [DESCRIPTION OF EMBODIMENTS]

The following is a detailed description of a preferred embodiment of the present disclosure with reference to the accompanying drawings. In this specification and the drawings, duplicated explanations will be omitted by applying the same reference numerals to configuration elements that have substantially the same functional configuration.

FIG.1 shows an example configuration of an image analysis system SYS according to an embodiment of the present invention. As shown in FIG. 1, the image analysis system SYS includes a server 1. The server 1 corresponds to an example of an "image analysis apparatus" of the present disclosure.

The server 1, as an example, supports detection of an abnormality in a target object existing in a real space (hereinafter referred to as "target object 100"). In other words, Server 1 supports inspection of the target object 100. The target object 100 is, for example, a reinforced concrete structure. In this case, for example, the reinforced concrete structure has a wall surface (outer surface) that is substantially parallel to a vertical direction. Also, for example, an abnormality of the target object 100 is floating of concrete.

FIGS. 2A and 2B are schematic cross-sectional views showing a phenomenon of floating occurring in concrete 101 of a reinforced concrete structure, which is the target object 100. As shown in FIG. 2A, the target object 100, which is the reinforced concrete structure, includes the concrete 101 and a rebar 103. An outer surface 104 of the concrete 101 is exposed. A direction D indicates a vertical upward direction. The rebar 103 is, for example, a deformed rebar.

The rebar 103 may corrode and expand due to the penetration of water or other substances into the concrete 101. As a result, cracks 104 may occur in the concrete 101, originating from the rebar 103. Then, as shown in FIG. 2B, a portion of the concrete 101 is pushed out, resulting in the formation of a floating portion 102.

The server 1 supports detection of the floating portion 102 of the concrete 101 based on a three-dimensional model of the target object 100. In particular, in the embodiment, the server 1 can suppress a detection omission of the floating portion 102 based on the three-dimensional model of the target object 100 even when a floating distance L1 of the floating portion 102 is relatively small. The floating distance L1 is, as an example, approximately 1 mm to approximately 2 mm. Details are described below.

Returning to FIG. 1, the image analysis system SYS includes at least one terminal 2, at least one moving apparatus 3, at least one imaging device 5, or at least one three-dimensional measurement device 7.

The server 1, the terminal 2, the moving apparatus 3, the imaging device 5 and the three-dimensional measurement device 7 are connected to a network NW. The network NW includes, for example, the Internet, a closed network, a public telephone network, a LAN (Local Area Network), and a short-range wireless network.

The terminal 2 is, for example, a personal computer (e.g., a notebook PC, a desktop PC, or a tablet).

The moving apparatus 3 is, for example, an unmanned moving apparatus or a manned moving apparatus. The unmanned moving apparatus is, for example, an unmanned aerial vehicle such as a drone, an unmanned ground machine, an unmanned underwater vehicle, or an unmanned surface vehicle. The unmanned ground machine is, for example, an unmanned ground vehicle or an unmanned ground machine modeled after a living organism (e.g., a snake-type unmanned ground machine). The manned moving apparatus is, for example, an aircraft, an automobile, a ship, or a submarine. The moving apparatus 3 includes a camera 4.

The imaging device 5 includes a camera 6. The imaging device 5 is, for example, a portable terminal such as a smartphone. The imaging device 5 may be, for example, the camera 6 itself.

The cameras 4 and 6 image the target object 100 and generate video data that represents a moving image including an image of the target object 100. The moving image is a sequence of consecutive two-dimensional images. The cameras 4 and 6 may also generate a plurality of still image data items each representing a still image including an image of the target object 100. A still image is a two-dimensional image.

The video data is hereinafter referred to as "video data 511" (FIG. 2). The still image data items are referred to as "still image data set 512" (FIG. 2).

Hereinafter, when it is not necessary to distinguish between the cameras 4 and 6, the cameras 4 and 6 are collectively referred to as "camera CM."

The three-dimensional measurement device 7 measures a shape of the target object 100 and generates three-dimensional data representing the shape of the target object 100 (hereinafter referred to as "three-dimensional data 513"). The three-dimensional data 513 is typically point cloud data. A three-dimensional model of the target object 100 is formed by the three-dimensional data 513. The three-dimensional measurement device 7 may be contact type or non-contact type. Also, the three-dimensional measurement device 7 may employ an active method or a passive method. The active method is, for example, optical radar method (Time of Flight (ToF) method), active stereo method, or optical interference method. The optical radar method measures a shape of the target object 100 by irradiating the target object 100 with light and measuring a time or phase change until the reflected light returns to a detector. The optical radar method is, for example, LiDAR (Light Detection And Ranging). The active stereo method measures a shape of the target object 100 by projecting a laser beam, slit light, or a light code pattern. The optical interference method measures a shape of the target object 100 by irradiating the target object 100 with light and using interference of the light. The passive method is, for example, lens focus method.

The target object 100 to be imaged by the camera CM and the target object 100 to be measured by the three-dimensional measurement device 7 are not particularly limited as long as it can be imaged by the camera CM or it can be measured by the three-dimensional measurement device 7. For example, a size, a shape, a pattern, and a color of the target object 100 are not particularly limited. For example, the target object 100 is one or more movable or immovable properties. The target object 100 is, for example, one or more objects. Typically, the target object 100 is one or more stationary objects. The stationary object is, for example, an artificial object or a natural object. The artificial object is, for example, a structure, a machine, an electronic device, or a work of authorship. The structure is, for example, a building or an infrastructure facility. The building is, for example, a high-rise building or a residential house. The infrastructure facility is a facility for building social infrastructure. For example, the infrastructure facility is a road, a bridge, a road traffic facility, a power generation facility, a power distribution facility, a water treatment facility, or a gas distribution facility. The machine is, for example, an automobile, a work vehicle, a train, an aircraft, a ship, a submarine, or a robot. The natural object is, for example, a tree, a forest, a ground surface, a cliff, a coast, or a river.

The terminal 2 acquires the video data 511 or the still image data set 512 generated by the camera CM, or the three-dimensional data 513 generated by the three-dimensional measurement device 7. For example, the terminal 2 receives, via the network NW, the video data 511 or the still image data set 512 transmitted from the camera CM, or the three-dimensional data 513 transmitted from the three-dimensional measurement device 7. The terminal 2 transmits the video data 511, the still image data set 512, and the three-dimensional data 513 to the server 1 via the network NW. Incidentally, the moving apparatus 3 and the imaging device 5 may also transmit the video data 511 or the still image data set 512 to the server 1 via the network NW. Also, the three-dimensional measurement device 7 may transmit the three-dimensional data 513 to the server 1 via the network NW.

FIG. 3 is a block diagram showing an example configuration of the server 1 in FIG. 1. As shown in FIG. 3, the server 1 includes an arithmetic unit 10, a communication unit 40, and a storage unit 50. The server 1 may also include an input unit 20 and a display unit 30.

The input unit 20 is an input device for inputting various types of information to the arithmetic unit 10. For example, the input unit 20 is a keyboard and a pointing device, or a touch panel.

The display unit 30 displays various types of information. The display unit 30 is, for example, a liquid crystal display or an organic electroluminescent display.

The communication unit 40 is connected to the network NW. The communication unit 40 communicates with external devices connected to the network NW. The external devices are, for example, the terminal 2, the moving apparatus 3, the imaging device 5, and the three-dimensional measurement device 7. The communication unit 40 is a communication device that communicates according to a predetermined communication protocol, and includes, for example, a network interface controller. The predetermined communication protocol is, for example, a protocol compliant with Ethernet (registered trademark) and the Internet Protocol Suite.

The communication unit 40 receives the video data 511 or the still image data set 512 from the terminal 2, the moving apparatus 3, and the imaging device 5 via the network NW. Also, the communication unit 40 receives the three-dimensional data 513 from the terminal 2 and the three-dimensional measurement device 7 via the network NW.

The storage unit 50 includes a storage device, and stores data and computer programs. The storage unit 50 includes a main storage device such as a semiconductor memory or the like, and an auxiliary storage device such as a semiconductor memory, a hard disk drive, or the like.The storage unit 50 may also include removable media such as an optical disk. The storage unit 50 may be, for example, a non-transitory computer readable storage medium.

The storage unit 50 stores the video data 511, the still image data set 512, and the three-dimensional data 513. The video data 511, the still image data sets 512, and the three-dimensional data 513 are associated with attribute information (hereinafter referred to as "attribute information AT"). The attribute information AT includes, for example, user information, data acquisition conditions, and target object information. The user information includes, for example, identification information of a user of the terminal 2, the moving apparatus 3, the imaging device 5, or the three-dimensional measurement device 7. The data acquisition conditions include, for example, imaging time or measurement time. The imaging time and the measurement time are indicated by one or more of year, month, day, and time. The data acquisition conditions may include information about an imaging location or a measurement location. The imaging location and the measurement location are indicated, for example, by position coordinates of the camera CM and the three-dimensional measurement device 7 obtained by GPS (Global Positioning System) or GNSS (Global Navigation Satellite System), respectively. The target object information includes, for example, identification information of the target object 100. The target object information may include coordinates of a ground control point (GCP: Ground control point).

The storage unit 50 also stores a three-dimensional model 514, posture information items 515, reference plane information 516, relative posture information items 517, and a color table TB. These data items are stored when generated. Details of these data items are described below.

The arithmetic unit 10 performs various calculations. The arithmetic unit 10 includes a processor such as a CPU (Central Processing Unit), a GPU (Graphics Processing Unit), or the like.

Specifically, the arithmetic unit 10 includes a model generation unit 11, a posture calculation unit 13, a reference calculation unit 14, and a relative posture calculation unit 15. The arithmetic unit 10 may also include an acceptance unit 12, a coloring unit 16, and a display control unit 17. For example, the arithmetic unit 10 functions as the model generation unit 11, the posture calculation unit 13, the reference calculation unit 14, the relative posture calculation unit 15, the acceptance unit 12, the coloring unit 16, and the display control unit 17 by executing a computer program stored in the storage unit 50.

The model generation unit 11 acquires, from the video data 511 or the still image data set 512 in the storage unit 50, a plurality of two-dimensional images generated by imaging the target object 100 from a plurality of different imaging positions. Then, the model generation unit 11 generates the three-dimensional model 514 of the target object 100 based on the plurality of two-dimensional images. The three-dimensional model 514 is placed in a virtual space. The three-dimensional model 514 represents a three-dimensional shape of the target object 100. The three-dimensional model 514 is formed by point cloud data. The point cloud data is data representing a point cloud. The point cloud is an aggregation of multiple points. The point cloud data includes three-dimensional coordinates of each point. The point cloud data may further include one or more information of color information (e.g., RGB values) of each point, normal vector information of each point, and reflection intensity information.

As an example, the model generation unit 11 generates the three-dimensional model 514 by performing SfM (Structure from Motion) processing. SfM processing refers to a process that generates the three-dimensional model 514 by utilizing the principle of triangulation based on the plurality of two-dimensional images generated by imaging the target object 100 having a plurality of feature points from the plurality of imaging positions. SfM processing preferably includes bundle adjustment. The bundle adjustment refers to a process of minimizing reprojection error. Also, the model generation unit 11 may perform MVS (Multi View Stereo) processing in addition to SfM processing. MVS processing refers to a process that calculates depth and normal for each pixel of each two-dimensional image by multi-view stereo measurement, integrates them, and generates a dense point cloud of the target object 100.

The model generation unit 11 also assigns a surface to the three-dimensional model 514 based on the point cloud data. The surface of the three-dimensional model 514 is composed of a plurality of facets. The facets are typically planar. The facet is, for example, a polygon. The polygon is, for example, a triangle. Each facet forming the surface of the three-dimensional model 514 may be referred to as a "surface element" or "planar element."

The process of assigning the surface by the model generation unit 11 is, for example, a process of converting the point cloud data constituting the three-dimensional model 514 into mesh data. In this case, for example, the model generation unit 11 generates a plurality of polygonal (e.g., triangular) facets (e.g., polygons) formed by connecting points of the point cloud data, and represents the three-dimensional model 514 by the plurality of polygonal facets. In this case, for example, the model generation unit 11 generates TIN (Triangulated Irregular Network) data based on the point cloud data, and represents the three-dimensional model 514 by the TIN data. As a result, the three-dimensional model 514 is represented by an aggregation of triangular facets. Incidentally, the process of assigning the surface may be, for example, a process of converting point cloud data into surface data.

Furthermore, the model generation unit 11 may add material information to the surface assigned to the three-dimensional model 514 based on the two-dimensional images. The material information is information including a color and a pattern of the target object 100. For example, the model generation unit 11 may perform a process of mapping a texture to each facet (e.g., each polygon) constituting the mesh data of the three-dimensional model 514.

Incidentally, the three-dimensional data 513 generated by the three-dimensional measurement device 7 is similar to the point cloud data constituting the three-dimensional model 514 generated by the model generation unit 11. Similarly, a surface may be assigned to the three-dimensional model represented by the three-dimensional data 513, and material information may be added to the surface.

The storage unit 50 stores the three-dimensional model 514 generated by the model generation unit 11. Additionally, the three-dimensional data 513 generated by the three-dimensional measurement device 7 may be treated as the three-dimensional model 514.

Incidentally, the method performed by the three-dimensional measurement device 7 and SfM processing are exemplified as methods for generating the three-dimensional data 513 and the three-dimensional model 514. However, as long as three-dimensional data or a three-dimensional model can be generated, these generation methods are not particularly limited. For example, three-dimensional data or a three-dimensional model may be generated by 3D Gaussian Splatting or NeRF (Neural Radiance Field).

Referring now to FIGS. 2, 3, and 4, the acceptance unit 12 is described. FIG. 4 is a perspective view showing an example of the three-dimensional model 514. As shown in FIG. 4, the three-dimensional model 514 is placed in a virtual space VS. The three-dimensional model 514 represents the target object 100 that exists in the real space. A three-dimensional coordinate system CS is set in the virtual space VS. The three-dimensional coordinate system CS is defined by mutually orthogonal X-axis, Y-axis, and Z-axis. The three-dimensional coordinate system CS may be a coordinate system with an origin O at a predetermined position in the virtual space VS, or the three-dimensional coordinate system CS may be a coordinate system to which geospatial coordinates (coordinates on ground) or actual dimension information is assigned.

As shown in FIGS. 3 and 4, the acceptance unit 12 accepts designation of a target area 530 to be processed in the three-dimensional model 514. For example, the display control unit 17 causes a display unit of the terminal 2 to display the three-dimensional model 514 in response to a request from the terminal 2. The user of the terminal 2 operates an input unit of the terminal 2 to designate the target area 530 on the three-dimensional model 514 displayed on the display unit 30. As a result, the terminal 2 sends information indicating the target area 530 to the server 1 via the network NW. The communication unit 40 of the server 1 receives the information indicating the target area 530. The acceptance unit 12 then accepts the designation of the target area 530 via the communication unit 40. The storage unit 50 stores the information indicating the target area 530. The configuration of the display unit and the input unit of the terminal 2 is similar to the configuration of the display unit 30 and the input unit 20 of the server 1, respectively.

Next, the posture calculation unit 13 is described with reference to FIGS. 3 and 5. FIG. 5 is a perspective view showing facets 525 that constitute the three-dimensional model 514. FIG. 5 shows a portion of the three-dimensional model 514. The surface of the three-dimensional model 514 is composed of the plurality of facets 525. In the example in FIG. 5, the facets 525 are triangular facets (e.g., polygons). Each facet 525 is formed by connecting points 519, which constitute a point cloud 518.

As shown in FIGS. 3 and 5, the posture calculation unit 13 calculates the plurality of posture information items 515 respectively indicating postures of the plurality of facets 525 in the target area 530 (FIG. 4). The storage unit 50 stores the posture information items 515. As shown in FIG. 5, the posture information items 515 is normal information items indicating normals of the facets 525. Therefore, according to the embodiment, the postures of the facets 525 can be accurately indicated by the normals. Specifically, the normal information items each include information indicating the normal vector 535 of each of the facets 525. Thus, as a preferred example, the posture calculation unit 13 calculates the normal vector 535 for each of the plurality of facets 525. The normal vector 535 is, for example, a unit normal vector. More specifically, the posture calculation unit 13 calculates the normal vector 535 based on three-dimensional coordinates of a plurality of points 519 located at vertices of each facet 525. For example, a start point and an end point of the normal vector 535 are indicated by three-dimensional coordinates.

Next, the reference calculation unit 14 is described with reference to FIGS. 2, 3, and 6. FIG. 6 is a perspective view showing an example of the point cloud 518 and a reference plane 520. FIG. 6 shows a portion of the point cloud 518 that constitutes the three-dimensional model 514.

As shown in FIGS. 3 and 6, the reference calculation unit 14 calculates the reference plane information 516 indicating a reference plane 520 based on three or more surface location information items, each of which indicates the location of a respective one of three or more specific spots 521 on the three-dimensional model 514. The reference plane 520 is planar. The reference plane 520 is, for example, a virtual plane. The storage unit 50 stores the reference plane information 516. The surface location information item is typically three-dimensional coordinates in the three-dimensional coordinate system CS. In the example of FIG. 5, the number of the specific spots 521 is six, but it is not particularly limited as long as it is three or more. The specific spots 521 are spots in the three-dimensional model 514 corresponding to areas where no abnormality occurs in the target object 100 (normal areas).

Specifically, the reference calculation unit 14 calculates the reference plane information 516 indicating the reference plane 520 by a least-squares method based on the three-dimensional coordinates of three or more points 519 respectively located at the three or more specific spots 521. The reference plane information 516 includes, for example, information indicating an equation of a plane. The reference plane 520 is a least-squares plane. According to the embodiment, by performing the least-squares method on the three-dimensional coordinates of the three or more points 519, the reference plane 520 fitted to the plurality of points 519 can be accurately determined.

More specifically, the acceptance unit 12 accepts the designation of the specific spots 521. For example, the display control unit 17 causes the display unit of the terminal 2 to display the three-dimensional model 514 in response to a request from the terminal 2. The user of the terminal 2 operates the input unit of the terminal 2 to designate the three or more specific spots 521 in the target area 530 (FIG. 4) of the three-dimensional model 514 displayed on the display unit 30. For example, the user designates the three or more specific spots 521 by operating a cursor displayed on the display unit 30 with a pointing device and clicking on three or more spots in the target area 530. In this case, spots in the target area 530 where no abnormality occurs (i.e., normal spots) are designated as the specific spots 521. For example, in a case where the target object 100 is a reinforced concrete structure, normal spots where no floating portion 102, spalling, or delamination of the concrete 101 (FIG. 2) occurs are designated.

The terminal 2 sends information indicating the designated specific spots 521 to the server 1 via the network NW. The communication unit 40 of the server 1 receives the information indicating the specific spots 521. The acceptance unit 12 then accepts the designation of the specific spots 521 via the communication unit 40. In other words, the acceptance unit 12 accepts the designation of the three or more specific spots 521 via the input unit operated by the user. Consequently, according to the embodiment, processing for designating the specific spots 521 becomes unnecessary at the server 1, and thus the processing load can be reduced. The storage unit 50 stores the information indicating the three or more specific spots 521.

The input unit of the terminal 2 corresponds to an example of an "input device" in the present disclosure.

The reference calculation unit 14 calculates the reference plane information 516 indicating the reference plane 520 based on the three or more points 519 located at the three or more specific spots 521 accepted by the acceptance unit 12. In other words, the reference calculation unit 14 calculates the reference plane information 516 based on the points 519 located at the specific spots 521 where no abnormality occurs (the normal specific spots 521). Therefore, the reference plane 520 is suitable as a reference for detecting abnormalities in the target object 100.

Incidentally, for example, the reference calculation unit 14 may regard, among the plurality of points 519, a point 519 closest to the specific spot 521 as the point 519 located at the specific spot 521. Also, for example, the reference calculation unit 14 may regard, among the plurality of points 519, a point 519 located within a circle or a sphere of a predetermined radius centered at the specific spot 521 as the point 519 located at the specific spot 521.

Next, the relative posture calculation unit 15 is described with reference to FIGS. 3 and 7. FIG. 7 is a figure showing a cross-section of the target object 100 superimposed on the point cloud 518 of the three-dimensional model 514 and the reference plane 520. The target object 100 in FIG. 7 shows, as an example, the target object 100 shown in FIG. 2B. In FIG. 7, the dot hatching representing the concrete 101 is omitted to simplify the drawing. Hereafter, attention is focused on a boundary region 540 between the floating portion 102 of the concrete 101 and the non-floating portion of the concrete 101. Also, in FIG. 7, each facet 525 is shown in each boundary region 540, with points 519a and 519b of the point cloud 518 serving as two of its three vertices.

As shown in FIGS. 3 and 7, the relative posture calculation unit 15 calculates the relative posture information item 517 indicating the posture of the facet 525 relative to the reference plane 520. The relative posture information item 517 is calculated for each facet 525. The relative posture information items 517 each include information indicating the inclination of the normal vector 535 relative to the reference plane 520. Therefore, according to the embodiment, the presence or absence of the floating portion 102 can be determined based on the inclination of each normal vector 535 relative to the reference plane 520. As a result, even when the floating distance L1 of the floating portion 102 is relatively small, the occurrence of detection omission of the floating portion 102 can be suppressed.

In contrast, in the comparative example (e.g., JP 2016 - 105 081 A), in a case where the floating distance L1 of the floating portion 102 is relatively small, there is a possibility that a detection omission of the floating portion 102 may occur. In other words, in the comparative example, points 519 for which normal distances L2 from the reference plane 520 to the points 519 are greater than or equal to a predetermined value are extracted as feature points. Therefore, in the case where the floating distance L1 is relatively small, depending on the setting of the reference plane 520, the normal distances L2 to the points 519 indicating the surface of the floating portion 102 may possibly become less than the predetermined value. As a result, the points 519 indicating the surface of the floating portion 102 may not be extracted as the feature points, leading to the possibility that the detection omission of the floating portion 102 may occur. In other words, in the comparative example, the accuracy of setting the reference plane 520 has a significant influence on the accuracy of detecting the floating portion 102.

In contrast, in the embodiment, since the presence or absence of the floating portion 102 can be determined based on the inclination of each normal vector 535 relative to the reference plane 520, the influence of the accuracy of setting the reference plane 520 on the accuracy of detecting the floating portion 102 is smaller compared to the comparative example. Therefore, compared to the comparative example, the detection omission of the floating portion 102 can be suppressed, and setting the reference plane 520 becomes easier.

Referring now to FIGS. 3 and 8, the details of the reference calculation unit 14 and the relative posture calculation unit 15 are described. FIG. 8 is a perspective view illustrating the reference plane 520, a reference plane vector 560, the facet 525, the normal vector 535, and a reference vector 550. In FIG. 8, one facet 525, one normal vector 535, and one reference vector 550 are shown for simplification of the drawing.

As shown in FIG. 8, the reference calculation unit 14 sets the reference vector 550 to the normal vector 535. The reference vector 550 is parallel to the reference plane 520. The reference vector 550 is, for example, a unit vector. A starting point and an ending point of the reference vector 550 are indicated by three-dimensional coordinates. The reference plane information 516 (FIG. 3) includes information indicating the reference vector 550.

Specifically, the reference calculation unit 14 determines the reference plane vector 560. The reference plane vector 560 is a vector that is parallel to and included in the reference plane 520. For example, the reference plane vector 560 is indicated by three-dimensional coordinates. The reference plane information 516 (FIG. 3) includes information indicating the reference plane vector 560. The reference plane vector 560 is, for example, a unit vector.

As an example, the reference plane vector 560 is parallel to a line of intersection between the XY plane and the reference plane 520, a line of intersection between the YZ plane and the reference plane 520, or a line of intersection between the ZX plane and the reference plane 520 in the three-dimensional coordinate system CS. The line of intersection refers to a straight line formed at a intersection position of two planes. In this case, for example, the X axis and the Y axis in the three-dimensional coordinate system CS are parallel to the horizontal direction, while the Z axis is parallel to the vertical direction. Also, the XY plane is a plane that includes the X axis and the Y axis. The YZ plane is a plane that includes the Y axis and the Z axis. The ZX plane is a plane that includes the Z axis and the X axis.

For example, when vertical variations in the outer surface 104 of the target object 100 are inspected, the reference calculation unit 14 sets, as the reference plane vector 560, a vector parallel to the line of intersection between the YZ plane and the reference plane 520, or a vector parallel to the line of intersection between the ZX plane and the reference plane 520, from among a plurality of vectors within the reference plane 520. For example, when horizontal variations in the surface 104 of the target object 100 are inspected, the reference calculation unit 14 sets, as the reference plane vector 560, a vector parallel to the line of intersection between the XY plane and the reference plane 520 from among the plurality of vectors within the reference plane 520.

As described above, the reference calculation unit 14 can determine the reference plane vector 560 from among the plurality of vectors within the reference plane 520, depending on the purpose of the inspection.

The reference calculation unit 14 translates the reference plane vector 560 and aligns the starting point of the reference plane vector 560 with the starting point of the normal vector 535. The reference plane vector 560 after translation is the reference vector 550. In this way, the reference vector 550 is set to the normal vector 535.

The reference plane vector 560 is information indicating a characteristic (e.g., a posture) of the reference plane 520. Therefore, the reference vector 550 is also information indicating the characteristic (e.g., the posture) of the reference plane 520. Also, the reference vector 550 is parallel to the reference plane vector 560. Therefore, for example, the reference vector 550 is parallel to the line of intersection between the XY plane and the reference plane 520, the line of intersection between the YZ plane and the reference plane 520, or the line of intersection between the ZX plane and the reference plane 520 in the three-dimensional coordinate system CS.

The reference calculation unit 14 sets reference vectors 550 respectively to the normal vectors 535 of all facets 525 in the target area 530 (FIG. 4).

The relative posture calculation unit 15 calculates a dot product of the normal vector 535 and the reference vector 550 (hereinafter referred to as "dot product value IP1") for each facet 525 in the target area 530. The dot product value IP1 indicates an inclination of the normal vector 535 relative to the reference vector 550. In other words, the dot product value IP1 indicates an inclination of the normal vector 535 relative to the reference plane 520. The dot product value IP1 is an example of the relative posture information item 517. The storage unit 50 stores the relative posture information items 517, each of which includes information indicating the dot product value IP1.

Thus, according to the embodiment, the relative posture calculation unit 15 can easily calculate the inclination of each normal vector 535 relative to the reference plane 520, that is, the inclination of each facet 525 relative to the reference plane 520, by calculating the dot product value IP1 of each normal vector 535 and the reference vector 550. For example, the greater the absolute value of the dot product value IP1, the greater the inclination of the normal vector 535 (the facet 525) relative to the reference plane 520. Therefore, the relative posture calculation unit 15 can estimate that as the absolute value of the dot product value IP1 increases, the probability that an abnormality occurs in the region of the target object 100 corresponding to the facet 525, for which the dot product value IP1 is calculated, also increases. Incidentally, for example, the relative posture calculation unit 15 may calculate each angle between a respective one of the reference vectors 550 and a respective one of the normal vectors 535. In this case, the angles are an example of the relative posture information items 517.

As explained above with reference to FIGS. 7 and 8, according to the embodiment, the relative posture calculation unit 15 calculates the relative posture information items 517, which indicate the postures of facets 525 relative to the reference plane 520, based on the posture information items 515 (the normal vectors 535) of the respective facets 525 in the target area 530 and the reference plane information 516 (the reference vector 550), which indicates the characteristic of the reference plane 520. Therefore, an abnormality (e.g., the floating portion 102) of the target object 100 can be detected based on the relative posture information items 517. As a result, in the embodiment, compared to the comparative example described above, even when the degree of the abnormality in the target object 100 (e.g., the floating distance L1) is relatively small, the occurrence of the detection omission of the abnormality can be suppressed. Also, in the embodiment, since the presence or absence of an abnormality in the target object 100 can be determined based on the relative posture information items 517, the influence of the accuracy of setting the reference plane 520 on the accuracy of the abnormality detection is smaller compared to the comparative example described above. Therefore, the setting of the reference plane 520 is easier compared to the comparative example.

In the embodiment, the relative posture information items 517 (e.g., the absolute values of the dot product values IP1) each indicate the degree of the difference between the posture of the facet 525 and the posture of the reference plane 520. For example, a large difference between the posture of the facet 525 and the posture of the reference plane 520 indicates that an abnormality occurs in a region of the target object 100 corresponding to the facet 525. For example, when there is no difference or only a small difference between the posture of the facet 525 and the posture of the reference plane 520, it indicates that a region of the target object 100 corresponding to the facet 525 is normal.

Next, the coloring unit 16 is described with reference to FIG. 3 and FIGS. 9 to 11. The coloring unit 16 shown in FIG. 3 colors the three-dimensional model 514 based on the plurality of relative posture information items 517, which respectively correspond to the plurality of facets 525 constituting the surface of the three-dimensional model 514. The display control unit 17 causes the terminal 2 to display the colored three-dimensional model 514. Therefore, the user can recognize the relative posture information items 517 through colors by viewing the three-dimensional model 514. As a result, according to the embodiment, the user can easily estimate that an abnormality occurs in a region where colors indicating large differences between the posture of the reference plane 520 and the respective postures of the facets 525 are applied.

Specifically, the coloring unit 16 colors the three-dimensional model 514 based on the dot product values IP1 indicated by the relative posture information items 517. An example of this is explained with reference to FIGS. 9 to 11.

FIG. 9 is a perspective view showing an example of the plurality of facets 525 sharing one point 519. In the example in FIG. 9, the one point 519 forms the vertex of six facets 525. The relative posture calculation unit 15 calculates an average value (hereinafter referred to as "dot product value IP2") of the plurality of dot product values IP1 calculated for the plurality of facets 525 that share the one point 519. The relative posture calculation unit 15 then associates the dot product value IP2 with the point 519 shared by the plurality of facets 525. The dot product value IP2 is an example of the relative posture information item 517. The relative posture calculation unit 15 calculates the dot product value IP2 for each point 519 and associates the dot product value IP2 with each point 519.

The coloring unit 16 then colors each point 519 according to a range to which the dot product value IP2 associated with each point 519 belongs.

Incidentally, the relative posture calculation unit 15 may calculate an average value of the plurality of normal vectors 535 of the plurality of facets 525. In this case, the relative posture calculation unit 15 calculates a dot product value of the average value of the normal vectors 535 and the reference vector 550 (FIG. 8). The dot product value in this case is associated with the point 519 as the dot product value IP2 by the relative posture calculation unit 15.

FIG. 10 is a figure showing a color table TB referenced by the coloring unit 16. As shown in FIG. 10, the color table TB associates a plurality of ranges R1 to R10 with a plurality of color information items C1 to C10. The ranges R1 to R10 indicate ranges in which the dot product values IP2 associated with the respective points 519 are included. The color information items C1 to C10 indicate different colors from each other. The color information items C1 to C10 are indicated, for example, by RGB values. The color table TB is pre-stored in the storage unit 50. Incidentally, the number and values of the ranges and the color information items are examples and are not particularly limited. Also, the ranges have positive or negative signs, but ranges of absolute values may also be set.

The coloring unit 16 references the color table TB and colors each point 519 based on the color information item corresponding to the range to which the dot product value IP2 associated with each point 519 of the point cloud 518 belongs. For example, in a case where the dot product value IP2 belongs to the range R2, the coloring unit 16 colors the point 519 with the color indicated by the color information item C2.

Preferably, the coloring unit 16 colors the three-dimensional model 514 in a manner that distinguishes between a case where the normal vector 535 of the facet 525 is oriented vertically upward and a case where the normal vector 535 of the facet 525 is oriented vertically downward, relative to a horizontal direction. According to this preferred example, the user can easily estimate an area where a portion of the target object 100 shows a sign of delamination or spalling (e.g., the floating portion 102 in FIG. 2B) by viewing the colored three-dimensional model 514. The vertically upward and vertically downward directions include oblique directions with respect to the horizontal direction.

The color table TB in the preferred example is described in detail. Fig. 10 shows the reference plane 520, the normal vectors 535, and the reference vectors 550. In the example of Fig. 10, the reference plane 520 is parallel to the ZX plane. The reference vectors 550 are parallel to the Z-axis and are oriented vertically upward. The reference vectors 550 are also parallel to the line of intersection between the YZ plane and the reference plane 520. The Z-axis is oriented in a vertical direction. The X-axis and Y-axis are oriented in a horizontal direction. The normal vector 535a is oriented vertically downward relative to the horizontal direction. The normal vector 535b is oriented vertically upward relative to the horizontal direction.

In a case where the normal vector 535a is oriented vertically downward, the dot product value IP2 associated with the point 519, which is located at the vertex of the facet 525, has a negative sign, for example. On the other hand, in a case where the normal vector 535b is oriented vertically upward, the dot product value IP2 associated with the point 519, which is located at the vertex of the facet 525, has a positive sign, for example.

In the color table TB, the color information items C1 to C5 associated with the ranges R1 to R5, corresponding to cases where the dot product values IP2 have a negative sign, and the color information items C6 to C10 associated with the ranges R6 to R10, corresponding to cases where the dot product values IP2 have a positive sign, are distinguishable from each other. In this case, for example, the color information items C1 to C5 associated with the ranges R1 to R5 include colors belonging to one of a cold color system and a warm color system. Also, for example, the color information items C6 to C10 associated with the ranges R6 to R10 include colors belonging to the other of the cold color system and the warm color system.

FIG. 11 is a figure schematically showing the colored three-dimensional model 514. As shown in FIG. 11, the display control unit 17 causes the terminal 2 to display the colored three-dimensional model 514. In FIG. 11, the color information items C1 to C10 and the coordinate axes are shown for ease of understanding. Incidentally, the display control unit 17 may also cause the terminal 2 to display the color information items C1 to C10. In the example of FIG. 11, the three-dimensional model 514 is colored with colors indicated by the color information items C1 and C5. The user can estimate that an abnormality occurs in a region to which the color indicated by the color information item C1 is applied. For example, the user can estimate that the floating portion 102 (FIG. 2B) occurs in the region to which the color indicated by the color information item C1 is applied. This is because the color information item C1 corresponds to the dot product value IP2 belonging to the range R1.

As explained above with reference to FIGS. 10 and 11, according to the embodiment, the coloring unit 16 colors the three-dimensional model 514 according to the plurality of relative posture information items 517 (the dot product values IP2) respectively associated with the plurality of points 519 of the point cloud 518. Therefore, the user can recognize the relative posture information items 517 through colors by viewing the three-dimensional model 514. As a result, the user can estimate regions where abnormalities are occurring in the target object 100 by the colors indicating abnormalities. In particular, since the reference vector 550 is parallel to the line of intersection between the YZ plane and the reference plane 520, the user can easily recognize vertical variations in the surface of the three-dimensional model 514 (the surface 104 of the target object 100) through colors.

Here, as another example, in a case where the reference vector 550 is parallel to the line of intersection between the XY plane and the reference plane 520, the user can easily recognize horizontal variations in the surface of the three-dimensional model 514 (the outer surface 104 of the target object 100) through colors. In this case, for example, the coloring unit 16 colors the three-dimensional model 514 in a manner that distinguishes between a case where the normal vector 535 is oriented toward a vertical side and a case where the normal vector 535 is oriented toward a horizontal side. The vertical side and the horizontal side include oblique directions with respect to the vertical direction or the horizontal direction. In this case, for example, the vertical side is a case where the angle to the vertical direction with respect to the horizontal direction is equal to or greater than a threshold angle and equal to or less than 90 degrees, and the horizontal side is a case where the angle to the vertical direction with respect to the horizontal direction is less than the threshold angle. The threshold angle is, for example, 45 degrees, but is not particularly limited.

Next, an image analysis method according to the embodiment is described with reference to FIGS. 3 and 12. FIG. 12 is a flowchart showing the image analysis method. The image analysis method is performed by the server 1. As shown in FIG. 12, the image analysis method includes Steps S1 to S10. A computer program stored in the storage unit 50 causes the arithmetic unit 10 to execute Steps S1 to S10. In other words, a computer program product realizes Steps S1 to S10 when the computer program is executed by the arithmetic unit 10. The arithmetic unit 10 corresponds to an example of a "computer" in the present disclosure.

As shown in FIGS. 3 and 12, first, in Step S1, the model generation unit 11 acquires the three-dimensional model 514. Specifically, the model generation unit 11 generates the three-dimensional model 514 representing the target object 100 based on the plurality of two-dimensional images generated by imaging the target object 100 from the plurality of different imaging positions. Alternatively, the model generation unit 11 sets the three-dimensional data 513, which is based on the measurement result of the target object 100, as the three-dimensional model 514.

Next, in Step S2, the display control unit 17 causes the terminal 2 to display the three-dimensional model 514.

Next, in Step S3, the acceptance unit 12 accepts the designation of the target area 530 in the three-dimensional model 514 from the terminal 2 via the communication unit 40.

Next, in Step S4, the posture calculation unit 13 calculates the plurality of posture information items 515 respectively indicating the postures of the plurality of facets 525 constituting the surface in the target area 530 of the three-dimensional model 514.

Next, in Step S5, the display control unit 17 causes the terminal 2 to display the target area 530 of the three-dimensional model 514.

Next, in Step S6, the acceptance unit 12 accepts the designation of three or more specific spots 521 in the target area 530 from the terminal 2 via the communication unit 40.

Next, in Step S7, the reference calculation unit 14 calculates the reference plane information 516 indicating the reference plane 520 based on three or more the surface location information items respectively indicating locations of the three or more specific spots 521. Specifically, the reference calculation unit 14 calculates the reference plane information 516 by the least-squares method.

Next, in Step S8, the relative posture calculation unit 15 calculates the relative posture information items 517, each indicating the posture of the respective facet 525 relative to the reference plane 520, based on the posture information items 515 and the reference plane information 516, for each facet 525.

Next, in Step S9, the coloring unit 16 colors the three-dimensional model 514 based on the plurality of relative posture information items 517.

Next, in Step S10, the display control unit 17 causes the terminal 2 to display the colored three-dimensional model 514. The image analysis method then ends.

As explained above with reference to FIG. 12, according to the image analysis method of the embodiment, the relative posture calculation unit 15 calculates the relative posture information items 517 indicating the postures of the facets 525 relative to the reference plane 520 (Step S8). Therefore, an abnormality in the target object 100 can be detected based on the relative posture information items 517. As a result, compared to the comparative example described above, even when the degree of abnormality in the target object 100 is relatively small, the occurrence of detection omissions can be suppressed.

The image analysis method according to the embodiment is particularly effective when the target object 100 is a reinforced concrete structure. For example, as shown in FIG. 7, even when the floating distance L1 of the floating portion 102 is relatively small, the occurrence of detection omissions of the floating portion 102 can be suppressed.

### (First Modification)

In the first modification of the embodiment, the relative posture calculation unit 15 performs threshold processing. Specifically, the relative posture calculation unit 15 determines that a region of the target object 100, indicated by the facets 525 corresponding to the dot product values IP1 or by the points 519 corresponding to the dot product values IP2, is abnormal when the absolute values of the dot product values IP1 or the absolute values of the dot product values IP2, as indicated by the relative posture information items 517, are equal to or greater than a threshold value.

Also, for example, the relative posture calculation unit 15 may set a plurality of threshold values. In this case, for example, the relative posture calculation unit 15 determines that a region of the target object 100, indicated by the facets 525 corresponding to the dot product values IP1 or by the points 519 corresponding to the dot product values IP2, is abnormal when the absolute values of the dot product values IP1 or the absolute values of the dot product values IP2 are equal to or greater than a first threshold value. Also, for example, the relative posture calculation unit 15 determines that a region of the target object 100, indicated by the facets 525 corresponding to the dot product values IP1 or by the points 519 corresponding to the dot product values IP2, is quasi-abnormal when the absolute values of the dot product values IP1 or the absolute values of the dot product values IP2 are equal to or greater than a second threshold value and less than the first threshold value. The second threshold value is smaller than the first threshold value. Quasi-abnormal means a state that is not abnormal but is closer to abnormal than normal. Incidentally, the plurality of threshold values may include three or more threshold values.

### (Second Modification)

The second modification of the embodiment differs primarily from the above embodiment in that the coloring unit 16 colors each facet 525 instead of each point 519. That is, in the second modification, in the color table TB of FIG. 10, the plurality of ranges R6 to R10 indicate ranges of the dot product values IP1 for each facet 525. Accordingly, the coloring unit 16 references the color table TB according to the second modification and colors each facet 525 based on the color information item corresponding to the range to which the dot product value IP1 of each facet 525 belongs.

While preferred embodiments and modifications of the present disclosure have been described in detail with reference to the accompanying drawings, the technical scope of the present disclosure is not limited to these examples. It is apparent that a person having ordinary skill in the technical field of the present disclosure can conceive of various modifications or alterations within the scope of the technical concept described in the claims, and it is naturally understood that these also fall within the technical scope of the present disclosure.

The apparatus or system described in this specification may be realized as a single apparatus or may be realized by a plurality of apparatuses (e.g., cloud servers), some or all of which are connected via a network. For example, some or all of the model generation unit 11, the acceptance unit 12, the posture calculation unit 13, the reference calculation unit 14, the relative posture calculation unit 15, the coloring unit 16, and the display control unit 17 may be implemented on the same computer or server. For example, the model generation unit 11, the acceptance unit 12, the posture calculation unit 13, the reference calculation unit 14, the relative posture calculation unit 15, the coloring unit 16, and the display control unit 17 may be realized by separate computers or servers. Also, for example, the model generation unit 11, the acceptance unit 12, the posture calculation unit 13, the reference calculation unit 14, the relative posture calculation unit 15, the coloring unit 16, and the display control unit 17 may be realized by the terminal 2 or the three-dimensional measurement device 7. For example, the video data 511, the still image data set 512, the three-dimensional data 513, the three-dimensional model 514, the posture information items 515, the reference plane information 516, the relative posture information items 517, and the color table TB may each be stored in separate storage devices or servers.

A series of processes by the apparatus described in this specification may be realized using software, hardware, or a combination of software and hardware. It is possible to create a computer program to realize each function of the arithmetic unit 10 according to the present embodiment and to implement it in a PC or the like. Also, a computer-readable recording medium storing such a computer program can be provided. The recording medium is, for example, a magnetic disk, an optical disk, a magneto-optical disk, a flash memory, or the like. Also, the computer program described above may be distributed via a network, for example, without using a recording medium.

The processes described in this specification using flowchart diagrams do not necessarily have to be executed in the illustrated order. For example, in FIG. 12, Step S4 may be executed between Steps S7 and S8. Some processing steps may be executed in parallel. Also, additional processing steps may be adopted, and some processing steps may be omitted.

The effects described in this specification are merely explanatory or illustrative and are not limiting. In other words, the technology according to the present disclosure may achieve other effects that are apparent to those skilled in the art from the description in this specification, either together with or in place of the above effects.

### [Industrial Applicability]

The present disclosure provides an image analysis apparatus, an image analysis method, and a computer program, and has industrial applicability.

### [Reference Signs List]

1 Server (Image analysis apparatus), 11 Model generation unit, 12 Acceptance unit, 13 Posture calculation unit, 14 Reference calculation unit, 15 Relative posture calculation unit, 16 Coloring unit, 17 Display control unit

## Claims

1. An image analysis apparatus (1) comprising:
a posture calculation unit (13) that calculates a plurality of posture information items (515) respectively indicating postures of a plurality of facets (525) constituting a surface (104) of a three-dimensional model (514), the three-dimensional model (514) being placed in a virtual space and representing a target object (100) in a real space;
a reference calculation unit (14) that calculates reference plane information (516) indicating a reference plane (520) based on three or more surface location information items, the surface location information items respectively indicating locations of three or more specific spots on the three-dimensional model (514); and
a relative posture calculation unit (15) that calculates relative posture information items (517) indicating postures of the facets (525) relative to the reference plane (520) based on the posture information items (515) and the reference plane information (516);
wherein:
the posture information items (515) are normal information items indicating normals of the facets (525),
the normal information items each include information indicating a normal vector (535) of each of the facets (525), and
the relative posture information items (517) each include information indicating an inclination of the normal vector (535) relative to the reference plane (520);
**characterized in that**:
the reference plane information (516) includes information indicating a reference vector parallel to the reference plane (520), and
the relative posture information items (517) each include information indicating a dot product of the normal vector (535) and the reference vector (550).

2. The image analysis apparatus (1) according to claim 1, further comprising a coloring unit (16) that colors the three-dimensional model (514) based on the relative posture information items (517).

3. The image analysis apparatus (1) according to claim 2, wherein
the coloring unit (16) colors the three-dimensional model (514) in a manner that distinguishes between a case where the normal vector (535) is oriented vertically upward and a case where the normal vector (535) is oriented vertically downward, relative to a horizontal direction.

4. The image analysis apparatus (1) according to claim 2, wherein
the coloring unit (16) colors the three-dimensional model (514) in a manner that distinguishes between a case where the normal vector (535) is oriented toward a vertical side and a case where the normal vector (535) is oriented toward a horizontal side.

5. The image analysis apparatus (1) according to claim 1, further comprising an acceptance unit (12) that accepts designation of the three or more specific spots via an input device operated by a user.

6. The image analysis apparatus (1) according to claim 1, wherein
the reference calculation unit (14) calculates the reference plane information (516) by a least-squares method based on the three or more surface location information items.

7. The image analysis apparatus (1) according to claim 1, wherein
the target object (100) is a reinforced concrete structure.

8. An image analysis method comprising:
calculating a plurality of posture information items (515) respectively indicating postures of a plurality of facets (525) constituting a surface (104) of a three-dimensional model (514), the three-dimensional model (514) being placed in a virtual space and representing a target object (100) in a real space;
calculating reference plane information (516) indicating a reference plane (520) based on three or more surface location information items, the surface location information items respectively indicating locations of three or more specific spots on the three-dimensional model (514); and
calculating relative posture information items (517) indicating postures of the facets (525) relative to the reference plane (520) based on the posture information items (515) and the reference plane information (516);
wherein:
the posture information items (515) are normal information items indicating normals of the facets (525),
the normal information items each include information indicating a normal vector (535) of each of the facets (525), and
the relative posture information items (517) each include information indicating an inclination of the normal vector (535) relative to the reference plane (520);
**characterized in that**:
the reference plane information (516) includes information indicating a reference vector parallel to the reference plane (520), and
the relative posture information items (517) each include information indicating a dot product of the normal vector (535) and the reference vector (550).

9. A computer program causing a computer to perform:
calculating a plurality of posture information items (515) respectively indicating postures of a plurality of facets (525) constituting a surface (104) of a three-dimensional model (514), the three-dimensional model (514) being placed in a virtual space and representing a target object (100) in a real space;
calculating reference plane information (516) indicating a reference plane (520) based on three or more surface location information items, the surface location information items respectively indicating locations of three or more specific spots on the three-dimensional model (514); and
calculating relative posture information items (517) indicating postures of the facets (525) relative to the reference plane (520) based on the posture information items (515) and the reference plane information (516);
wherein:
the posture information items (515) are normal information items indicating normals of the facets (525),
the normal information items each include information indicating a normal vector (535) of each of the facets (525), and
the relative posture information items (517) each include information indicating an inclination of the normal vector (535) relative to the reference plane (520);
**characterized in that**:
the reference plane information (516) includes information indicating a reference vector parallel to the reference plane (520), and
the relative posture information items (517) each include information indicating a dot product of the normal vector (535) and the reference vector (550).

## Patentansprüche

1. Bildanalysevorrichtung (1), umfassend:
eine Lageberechnungseinheit (13), die eine Mehrzahl von Lageinformationselementen (515) berechnet, die jeweils Lagen einer Mehrzahl von Facetten (525) angeben, die eine Oberfläche (104) eines dreidimensionalen Modells (514) bilden, wobei das dreidimensionale Modell (514) in einem virtuellen Raum angeordnet ist und ein Zielobjekt (100) in einem realen Raum darstellt;
eine Referenzberechnungseinheit (14), die Referenzebeneninformation (516) berechnet, die eine Referenzebene (520) angibt, basierend auf drei oder mehr Oberflächenpositionsinformationselementen, wobei die Oberflächenpositionsinformationselemente jeweils Positionen von drei oder mehr spezifischen Stellen auf dem dreidimensionalen Modell (514) angeben; und
eine Relativlageberechnungseinheit (15), die Relativlageinformationselemente (517) berechnet, die Lagen der Facetten (525) relativ zu der Referenzebene (520) angeben, basierend auf den Lageinformationselementen (515) und der Referenzebeneninformation (516);
wobei:
die Lageinformationselemente (515) Normaleninformationselemente sind, die Normalen der Facetten (525) angeben,
die Normaleninformationselemente jeweils Information enthalten, die einen Normalenvektor (535) jeder der Facetten (525) angibt, und
die Relativlageinformationselemente (517) jeweils Information enthalten, die eine Neigung des Normalenvektors (535) relativ zu der Referenzebene (520) angibt;
**dadurch gekennzeichnet, dass**:
die Referenzebeneninformation (516) Information enthält, die einen zu der Referenzebene (520) parallelen Referenzvektor angibt, und
die Relativlageinformationselemente (517) jeweils Information enthalten, die ein Skalarprodukt des Normalenvektors (535) und des Referenzvektors (550) angibt.

2. Bildanalysevorrichtung (1) nach Anspruch 1, ferner umfassend eine Einfärbungseinheit (16), die das dreidimensionale Modell (514) basierend auf den Relativlageinformationselementen (517) einfärbt.

3. Bildanalysevorrichtung (1) nach Anspruch 2, wobei
die Einfärbungseinheit (16) das dreidimensionale Modell (514) in einer Weise einfärbt, die zwischen einem Fall, in dem der Normalenvektor (535) vertikal nach oben orientiert ist, und einem Fall, in dem der Normalenvektor (535) vertikal nach unten orientiert ist, bezogen auf eine horizontale Richtung, unterscheidet.

4. Bildanalysevorrichtung (1) nach Anspruch 2, wobei
die Einfärbungseinheit (16) das dreidimensionale Modell (514) in einer Weise einfärbt, die zwischen einem Fall, in dem der Normalenvektor (535) zu einer vertikalen Seite hin orientiert ist, und einem Fall, in dem der Normalenvektor (535) zu einer horizontalen Seite hin orientiert ist, unterscheidet.

5. Bildanalysevorrichtung (1) nach Anspruch 1, ferner umfassend eine Annahmeeinheit (12), die eine Festlegung der drei oder mehr spezifischen Stellen über eine von einem Benutzer bediente Eingabevorrichtung entgegennimmt.

6. Bildanalysevorrichtung (1) nach Anspruch 1, wobei
die Referenzberechnungseinheit (14) die Referenzebeneninformation (516) nach einer Methode der kleinsten Quadrate basierend auf den drei oder mehr Oberflächenpositionsinformationselementen berechnet.

7. Bildanalysevorrichtung (1) nach Anspruch 1, wobei
das Zielobjekt (100) ein Stahlbetonbauwerk ist.

8. Bildanalyseverfahren, umfassend:
Berechnen einer Mehrzahl von Lageinformationselementen (515), die jeweils Lagen einer Mehrzahl von Facetten (525) angeben, die eine Oberfläche (104) eines dreidimensionalen Modells (514) bilden, wobei das dreidimensionale Modell (514) in einem virtuellen Raum angeordnet ist und ein Zielobjekt (100) in einem realen Raum darstellt;
Berechnen von Referenzebeneninformation (516), die eine Referenzebene (520) angibt, basierend auf drei oder mehr Oberflächenpositionsinformationselementen, wobei die Oberflächenpositionsinformationselemente jeweils Positionen von drei oder mehr spezifischen Stellen auf dem dreidimensionalen Modell (514) angeben; und
Berechnen von Relativlageinformationselementen (517), die Lagen der Facetten (525) relativ zu der Referenzebene (520) angeben, basierend auf den Lageinformationselementen (515) und der Referenzebeneninformation (516);
wobei:
die Lageinformationselemente (515) Normaleninformationselemente sind, die Normalen der Facetten (525) angeben,
die Normaleninformationselemente jeweils Information enthalten, die einen Normalenvektor (535) jeder der Facetten (525) angibt, und
die Relativlageinformationselemente (517) jeweils Information enthalten, die eine Neigung des Normalenvektors (535) relativ zu der Referenzebene (520) angibt;
**dadurch gekennzeichnet, dass**:
die Referenzebeneninformation (516) Information enthält, die einen zu der Referenzebene (520) parallelen Referenzvektor angibt, und
die Relativlageinformationselemente (517) jeweils Information enthalten, die ein Skalarprodukt des Normalenvektors (535) und des Referenzvektors (550) angibt.

9. Computerprogramm, das einen Computer veranlasst, Folgendes auszuführen:
Berechnen einer Mehrzahl von Lageinformationselementen (515), die jeweils Lagen einer Mehrzahl von Facetten (525) angeben, die eine Oberfläche (104) eines dreidimensionalen Modells (514) bilden, wobei das dreidimensionale Modell (514) in einem virtuellen Raum angeordnet ist und ein Zielobjekt (100) in einem realen Raum darstellt;
Berechnen von Referenzebeneninformation (516), die eine Referenzebene (520) angibt, basierend auf drei oder mehr Oberflächenpositionsinformationselementen, wobei die Oberflächenpositionsinformationselemente jeweils Positionen von drei oder mehr spezifischen Stellen auf dem dreidimensionalen Modell (514) angeben; und
Berechnen von Relativlageinformationselementen (517), die Lagen der Facetten (525) relativ zu der Referenzebene (520) angeben, basierend auf den Lageinformationselementen (515) und der Referenzebeneninformation (516);
wobei:
die Lageinformationselemente (515) Normaleninformationselemente sind, die Normalen der Facetten (525) angeben,
die Normaleninformationselemente jeweils Information enthalten, die einen Normalenvektor (535) jeder der Facetten (525) angibt, und
die Relativlageinformationselemente (517) jeweils Information enthalten, die eine Neigung des Normalenvektors (535) relativ zu der Referenzebene (520) angibt;
**dadurch gekennzeichnet, dass**:
die Referenzebeneninformation (516) Information enthält, die einen zu der Referenzebene (520) parallelen Referenzvektor angibt, und
die Relativlageinformationselemente (517) jeweils Information enthalten, die ein Skalarprodukt des Normalenvektors (535) und des Referenzvektors (550) angibt.

## Revendications

1. Dispositif d'analyse d'image (1) comprenant :
une unité de calcul de posture (13) qui calcule une pluralité d'éléments d'information de posture (515) indiquant respectivement des postures d'une pluralité de facettes (525) constituant une surface (104) d'un modèle tridimensionnel (514), le modèle tridimensionnel (514) étant placé dans un espace virtuel et représentant un objet cible (100) dans un espace réel ;
une unité de calcul de référence (14) qui calcule une information de plan de référence (516) indiquant un plan de référence (520) sur la base de trois éléments d'information de position de surface ou plus, les éléments d'information de position de surface indiquant respectivement des positions de trois emplacements spécifiques ou plus sur le modèle tridimensionnel (514) ; et
une unité de calcul de posture relative (15) qui calcule des éléments d'information de posture relative (517) indiquant des postures des facettes (525) par rapport au plan de référence (520) sur la base des éléments d'information de posture (515) et de l'information de plan de référence (516) ;
dans lequel :
les éléments d'information de posture (515) sont des éléments d'information de normale indiquant des normales des facettes (525),
les éléments d'information de normale comprennent chacun une information indiquant un vecteur normal (535) de chacune des facettes (525), et
les éléments d'information de posture relative (517) comprennent chacun une information indiquant une inclinaison du vecteur normal (535) par rapport au plan de référence (520) ;
**caractérisé en ce que** :
l'information de plan de référence (516) comprend une information indiquant un vecteur de référence parallèle au plan de référence (520), et
les éléments d'information de posture relative (517) comprennent chacun une information indiquant un produit scalaire du vecteur normal (535) et du vecteur de référence (550).

2. Dispositif d'analyse d'image (1) selon la revendication 1, comprenant en outre une unité de coloration (16) qui colore le modèle tridimensionnel (514) sur la base des éléments d'information de posture relative (517).

3. Dispositif d'analyse d'image (1) selon la revendication 2, dans lequel
l'unité de coloration (16) colore le modèle tridimensionnel (514) d'une manière qui distingue entre un cas où le vecteur normal (535) est orienté verticalement vers le haut et un cas où le vecteur normal (535) est orienté verticalement vers le bas, par rapport à une direction horizontale.

4. Dispositif d'analyse d'image (1) selon la revendication 2, dans lequel
l'unité de coloration (16) colore le modèle tridimensionnel (514) d'une manière qui distingue entre un cas où le vecteur normal (535) est orienté vers un côté vertical et un cas où le vecteur normal (535) est orienté vers un côté horizontal.

5. Dispositif d'analyse d'image (1) selon la revendication 1, comprenant en outre une unité d'acceptation (12) qui accepte une désignation des trois emplacements spécifiques ou plus par l'intermédiaire d'un dispositif d'entrée actionné par un utilisateur.

6. Dispositif d'analyse d'image (1) selon la revendication 1, dans lequel
l'unité de calcul de référence (14) calcule l'information de plan de référence (516) par une méthode des moindres carrés sur la base des trois éléments d'information de position de surface ou plus.

7. Dispositif d'analyse d'image (1) selon la revendication 1, dans lequel
l'objet cible (100) est une structure en béton armé.

8. Procédé d'analyse d'image comprenant :
le calcul d'une pluralité d'éléments d'information de posture (515) indiquant respectivement des postures d'une pluralité de facettes (525) constituant une surface (104) d'un modèle tridimensionnel (514), le modèle tridimensionnel (514) étant placé dans un espace virtuel et représentant un objet cible (100) dans un espace réel ;
le calcul d'une information de plan de référence (516) indiquant un plan de référence (520) sur la base de trois éléments d'information de position de surface ou plus, les éléments d'information de position de surface indiquant respectivement des positions de trois emplacements spécifiques ou plus sur le modèle tridimensionnel (514) ; et
le calcul d'éléments d'information de posture relative (517) indiquant des postures des facettes (525) par rapport au plan de référence (520) sur la base des éléments d'information de posture (515) et de l'information de plan de référence (516) ;
dans lequel :
les éléments d'information de posture (515) sont des éléments d'information de normale indiquant des normales des facettes (525),
les éléments d'information de normale comprennent chacun une information indiquant un vecteur normal (535) de chacune des facettes (525), et
les éléments d'information de posture relative (517) comprennent chacun une information indiquant une inclinaison du vecteur normal (535) par rapport au plan de référence (520) ;
**caractérisé en ce que** :
l'information de plan de référence (516) comprend une information indiquant un vecteur de référence parallèle au plan de référence (520), et
les éléments d'information de posture relative (517) comprennent chacun une information indiquant un produit scalaire du vecteur normal (535) et du vecteur de référence (550).

9. Programme informatique amenant un ordinateur à effectuer :
le calcul d'une pluralité d'éléments d'information de posture (515) indiquant respectivement des postures d'une pluralité de facettes (525) constituant une surface (104) d'un modèle tridimensionnel (514), le modèle tridimensionnel (514) étant placé dans un espace virtuel et représentant un objet cible (100) dans un espace réel ;
le calcul d'une information de plan de référence (516) indiquant un plan de référence (520) sur la base de trois éléments d'information de position de surface ou plus, les éléments d'information de position de surface indiquant respectivement des positions de trois emplacements spécifiques ou plus sur le modèle tridimensionnel (514) ; et
le calcul d'éléments d'information de posture relative (517) indiquant des postures des facettes (525) par rapport au plan de référence (520) sur la base des éléments d'information de posture (515) et de l'information de plan de référence (516) ;
dans lequel :
les éléments d'information de posture (515) sont des éléments d'information de normale indiquant des normales des facettes (525),
les éléments d'information de normale comprennent chacun une information indiquant un vecteur normal (535) de chacune des facettes (525), et
les éléments d'information de posture relative (517) comprennent chacun une information indiquant une inclinaison du vecteur normal (535) par rapport au plan de référence (520) ;
**caractérisé en ce que** :
l'information de plan de référence (516) comprend une information indiquant un vecteur de référence parallèle au plan de référence (520), et
les éléments d'information de posture relative (517) comprennent chacun une information indiquant un produit scalaire du vecteur normal (535) et du vecteur de référence (550).
